# EUROPÄISCHE PATENTSCHRIFT

(11) **EP 1 441 026 B1**
(45) Veröffentlichungstag und Bekanntmachung des Hinweises auf die Patenterteilung: **17.10.2012**
(21) Anmeldenummer: 04000422.8
(22) Anmeldetag: 12.01.2004
(51) Int. Cl.: C12M 1/00, G01N 35/04, B65G 1/04, G01N 35/00, G01N 35/02, B65G 1/137

(54) **Automatisches Lagersystem und Klimaschrank mit automatischem Lagersystem**
Automatic storage system and climatic cabinet with automatic storage system
Système de stockage automatique et armoire de climatisation avec un tel système de stockage automatique

(30) Priorität: 10.01.2003 CH 402003; 20.01.2003 CH 772003; 12.05.2003 CH 8242003
(43) Veröffentlichungstag der Anmeldung: 28.07.2004
(73) Patentinhaber: LICONIC AG, 9493 Mauren (LI)
(72) Erfinder: Malin, Cosmas G., 9493 Mauren (LI)
(74) Vertreter: Sutter, Kurt

(56) Entgegenhaltungen:
- EP-A- 1 256 808
- EP-A1- 1 018 544
- EP-A2- 0 251 441
- WO-A-98/05753
- WO-A-02/059251
- DE-A- 19 857 282
- DE-A1- 10 207 847
- DE-A1- 19 750 912
- DE-A1- 19 936 572
- FR-A- 2 788 042
- US-A- 4 643 879
- US-A- 5 645 800
- US-B1- 6 323 035
- US-B1- 6 478 524

## Beschreibung

Die Erfindung betrifft einen Klimaschrank mit einem automatischen Lagersystem gemäss Oberbegriff von Anspruch 1.

Ein Klimaschrank dieser Art wird in US 5 645 800 dargestellt.

Automatische Lagersysteme dieser Art werden überall dort benötigt, wo auf Objekte automatisch zugegriffen werden muss. Das Anwendungsgebiet reicht von der langfristigen Lagerung von Mikrotiterplatten in Substanzenlagern bis hin zum kurzfristigen Bebrüten von Zellkulturen oder Mikroorganismen unter eng tolerierten Klimabedingungen. Zu den stets steigenden Anforderungen an Kompaktheit, Durchsatz bzw. Zugriffszeiten kommt neuerdings der Wunsch nach erschütterungsfreiem Lagern, letzteres insbesondere im Gebiete der Eiweiss Kristallographie, wo Eiweissstrukturen gezüchtet werden.

In der WO98/05753 ist ein Lagersystem vorgestellt, in dem Lagerobjekte in einer karussellartigen Anordnung von Lagerschächten gelagert sind und von einem Transportlift zwischen den Lagerschächten zu einer definierten Übergabeposition transportiert werden können. Während der Transportlift eine Höhenbewegung vollzieht, werden die Lagerschächte durch eine Rotation der karussellartigen Anordnung der Lagerschächte für den Zugriff zum Transportlift ausgerichtet.

In der EP 1 074 488 A1 ist eine Einrichtung vorgestellt, wo die Lagerschächte ortsfest gelagert sind. Diese Anordnung erlaubt ein weitgehend erschütterungsfreies Lagern der Lagerobjekte. Nachteilig an dieser Anordnung ist hingehen, dass hier nur eine geringe Anzahl Lagerschächte praktisch nutzbar ist. Wird dieses Lagersystem nämlich in einer Behausung mit frontseitiger Zugriffsmöglichkeit betrieben, kann auf lediglich zwei bis drei Lagerschächte einfach und ohne von dem Transportlift behindert zu werden, zugegriffen werden. Zur Lagerung von grossen Mengen von Lagerobjekten ist diese Anordnung nicht geeignet.

Es ist Aufgabe der vorliegenden Erfindung, eine Vorrichtung der eingangs genannten Art zu schaffen, die möglichst kompakt und dennoch einfach zu bedienen ist. Diese Aufgabe wird die unabhängigen Ansprüche gelöst. Durch die Anordnung der Beschickungsvorrichtung im Innenraum einer ringförmigen Lageranordnung ergibt sich ein kompakter Aufbau. Dennoch kann auf alle Lagerobjekte in der Lageranordnung zugegriffen werden.

Die Beschickungsvorrichtung ist drehbar, was es unnötig macht, im Normalbetrieb die Lageranordnung zu drehen. Dadurch ergeben sich eine erschütterungsfreie Lagerung und ein schneller Zugriff, da die träge Lageranordnung nicht bewegt werden muss. Zusätzlich wird auch die Lageranordnung, welche entnehmbare Lagerschächte aufweist, (z.B. manuell) drehbar ausgestaltet, so dass sie auch für die manuelle Beschickung gut zugänglich ist.

Das Lagersystem ist auch für Lagerobjekte unterschiedlicher Höhe geeignet.

In einer bevorzugten Ausführung umfasst die Lageranordnung Lagerschächte für die Lagerobjekte. Dabei ragen die Lagerobjekte drehachsenseitig vorzugsweise über die Lagerschächte bzw. zumindest deren Seitenwände hinaus. Dies erlaubt eine Anordnung, bei welcher die Lagerobjekte in benachbarten Lagerschächte sehr nahe aneinander gerückt werden können, was einen sehr kompakten Aufbau erlaubt.

Weitere bevorzugte Ausführungen der Erfindung ergeben sich aus den abhängigen Ansprüchen und aus der folgenden Beschreibung bevorzugter Ausführungsbeispiele anhand der Figuren.
- **Fig. 1a**: zeigt die Aufsicht eines Ausführungsbeispiels eines erfindungsgemässen Lagersystems, das in einem Klimaschrank angeordnet ist.
- **Fig. 1b**: zeigt die Aufsicht eines zweiten Ausführungsbeispiels eines erfindungsgemässen Lagersystems mit rotierbarer Liftsäule.
- **Fig. 1c**: zeigt die Frontansicht eines Ausführungsbeispiels als teilweise Schnittzeichnung des Lagersystems mit rotierbarer Liftsäule.
- **Fig. 1d**: zeigt einen Schnitt durch ein Ausführungsbeispiel eines Klimaschranks mit Schleusenfenster in der Decke,
- **Fig. 2a**: zeigt ein erstes Ausführungsbeispiel eines Schaufelantriebs.
- **Fig. 2b**: zeigt das erste Ausführungsbeispiel eines Schaufelantriebs mit teilweise ausgefahrener Schaufel.
- **Fig. 2c**: zeigt ein zweites Ausführungsbeispiel eines Schaufelantriebs.
- **Fig. 2d**: zeigt ein drittes Ausführungsbeispiel eines Schaufelantriebs.
- **Fig. 3a**: zeigt die Aufsicht eines Ausführungsbeispiels eines erfindungsgemässen Lagerschachtes.
- **Fig. 3b**: zeigt die Seitenansicht des Lagerschachtes.
- **Fig. 4a**: zeigt die Seitenansicht eines Ausführungsbeispiels einer horizontal verfahrbaren Transfervorrichtung.
- **Fig. 4b**: zeigt die Seitenansicht eines zweiten Ausführungsbeispiels einer horizontal verfahrbaren Transfervorrichtung.
- **Fig. 4c**: zeigt die Seitenansicht eines Ausführungsbeispiels eines vertikalen Transfers der Lagerobjekte mit dem Liftwagen.
- **Fig. 4d**: zeigt die Seitenansicht eines weiteren Ausführungsbeispiels eines vertikalen Transfers der Lagerobjekte mit dem Liftwagen.
- **Fig. 4e**: zeigt die Seitenansicht eines Ausführungsbeispiels einer vertikal verfahrbaren Transfervorrichtung.
- **Fig. 5**: zeigt die Seitenansicht einer Anordnung mit Barcode Leser und Platten Sensor zur Inventarisierung.
- **Fig. 6**: zeigt ein Ausführungsbeispiel eines Gesamtgerätes mit einer Übergabe über die Decke.

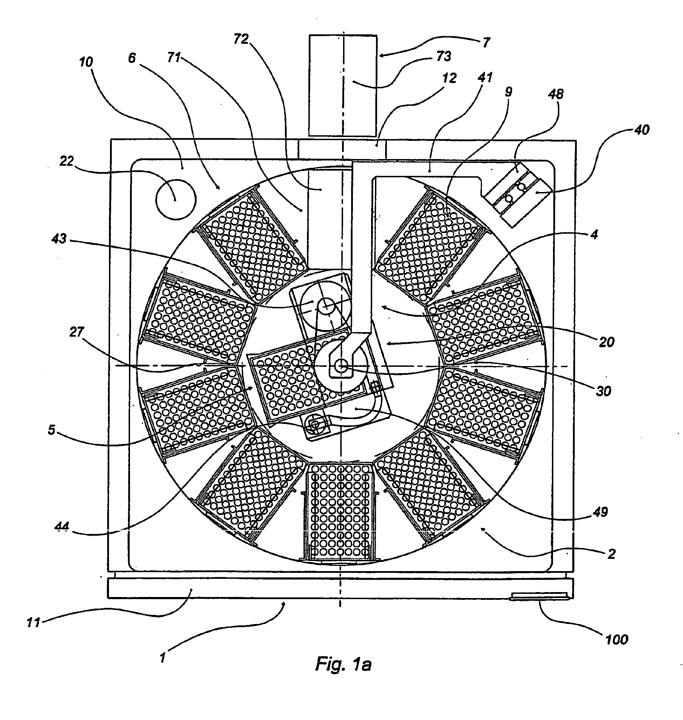

In der **Fig. 1a** ist eine Ausführung eines erfindungsgemässen Klimaschranks **1** mit einem erfindungsgemässen Lagersystem **2** als Aufsicht abgebildet. Das Lagersystem besitzt mehrere Lagerschächte **6**, die mehrere übereinander angeordnete Lagerstellen für die Aufnahme der Lagerobjekte **9** während ihrer Verweildauer im Lagersystem besitzen, und ein Transportsystem **4**, das den automatischen Transport der Lagerobjekte von einer äusseren Transferposition **73** zu einem beliebigen Lagerort innerhalb eines Lagerschachtes dient. Das Transportsystem umfasst eine Transfervorrichtung **7**, die stationär am Ort der äusseren Transferposition **73** angeordnet oder verfahrbar zwischen der äusseren Transferposition **73** und einer inneren Transferposition **72** sein kann.

Auf der Rückseite des Klimaschrankes befindet sich eine Schleuse **12** in Form einer automatischen Türe, durch die das Lagergut beim automatischen Transport be- bzw. entladen wird. Auf Lagergut, Lagerschächte und Lagersystem kann manuell über eine Benutzertüre **11** zugegriffen werden, deren Abmessungen in etwa jener einer Seitenfläche des Klimaschranks entsprechen.

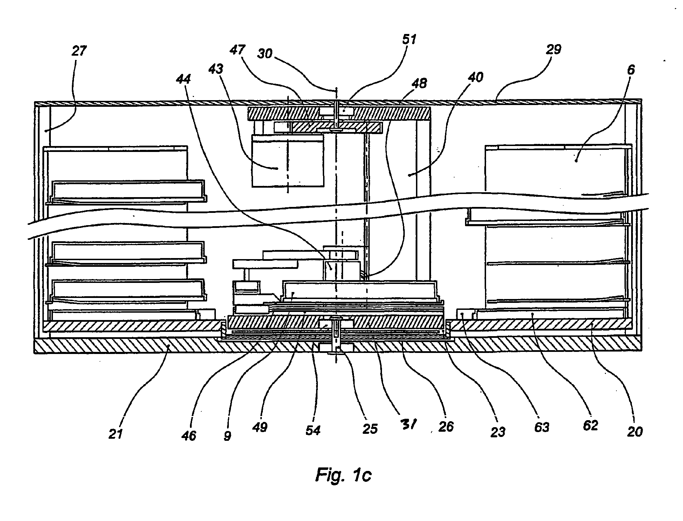

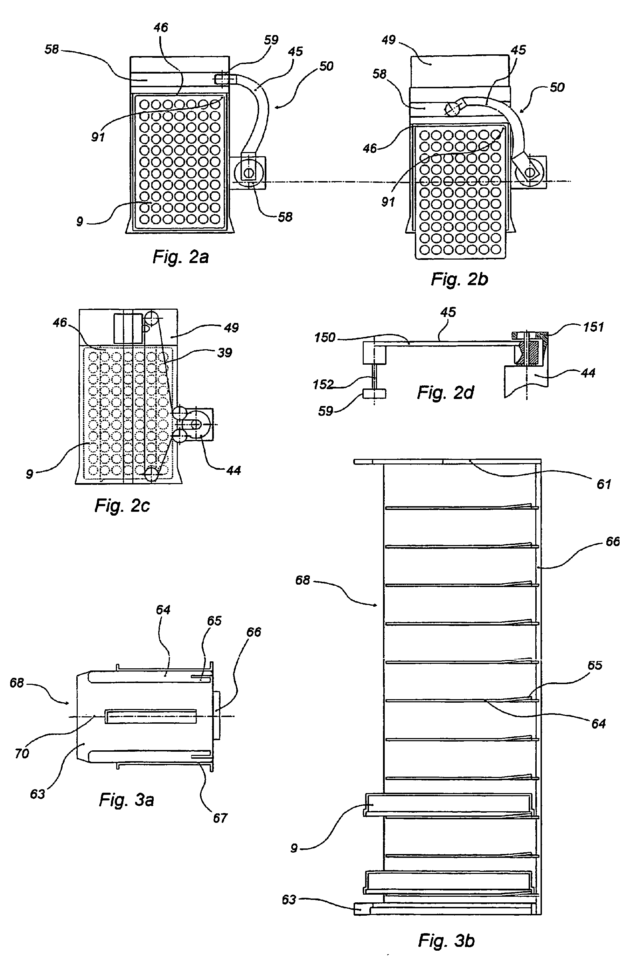

Die Lagerschächte, die zusammen eine Lageranordnung des Lagersystems bilden, sind ringförmig, konzentrisch um ein Rotationszentrum **30** auf einem Drehteller **20** angeordnet und sind im wesentlichen (d.h. mit Ausnahme eines weiter unten erwähnten Spaltes, dessen Breite ungefähr jener eines Lagerschachts entspricht) auf rund 360° auf einem Kreis verteilt. Die Lagerschächte weisen eine offene Beladeseite **68** auf (siehe Fig. 3a, 3b), die zum Rotationszentrum hin ausgerichtet ist. Der von den Lagerschächten gebildete Ring weist eine Lücke **71** auf. In einem durch die Lagerschächte gebildeten Innenraum **27** ist ein Liftwagen **5** des Transportsystems angeordnet. Das Transportsystem umfasst ferner eine Liftsäule **40,** an der der vertikal verfahrbare Liftwagen **5** mit einer Liftplatte **49** an einem Lifttragarm **41** aufgehängt ist. Die Liftplatte trägt eine radial verschiebbare Schaufel **46** (vgl. Fig. 1c) und ist über einen Rotationsantrieb **43** um das Rotationszentrum drehbar. Die Schaufel wird mittels eines Schaufelantriebs **44** bewegt. Der Rotationsantrieb ist am oberen Ende des Innenraums **27** an der Liftplatte befestigt und positioniert die Schaufel zu jeweils einem Lagerschacht, nämlich über eine Rotation um ein stationär angeordnetes Rotationsritzel **47.** Der Liftwagen ist über einen Liftantrieb **48** in der Höhe positionierbar. Der Drehteller ist über einen optionalen Drehtellerantrieb **22** positionierbar.

Die Schaufel **46** und der Schaufelantrieb **44** bilden eine Beschickungsvorrichtung, mit welcher, wie später genauer beschrieben, die Lagerobjekte **9** aus der Lageranordnung ausgelagert und in die Lageranordnung eingelagert werden können. Die Beschickungsvorrichtung ist um mindestens 200°, vorzugsweise um im wesentlichen 360° um das Rotationszentrum **30** drehbar.

Die Komponenten des Transportsystems sind so angeordnet, dass der freie Raum im Innenraum **27** genutzt wird. Die Liftsäule und der Liftantrieb sind in einem freien Eckraum - gebildet aus Nutzraum **10** und Lagersystem - angeordnet. Im automatischen Betrieb ist der Drehteller so positioniert, dass der Lifttragarm innerhalb der Lücke vertikal zwischen den Lagerschächten verfahrbar ist. Die Schächte sind, einmal positioniert, stationär und werden nur im Falle eines manuellen Zugriffs - beispielsweise beim frontseitigen Beladen - bewegt. In diesem Falle wird der Liftwagen so in eine oberste Position verfahren, dass die Lagerschächte unter dem Lifttragarm durchfahren können. Beim Entladen eines Lagerobjektes aus einem Lagerschacht positioniert der Rotationsantrieb die Schaufel zur Beladeseite des gewünschten Lagerschachts, während der Liftantrieb die Schaufel unterhalb der Auflagefläche des Lagerobjekts positioniert. Der Schaufantrieb fährt die Schaufel unter das Lagerobjekt. Die Schaufel wird wieder zurückgefahren, nachdem das Lagerobjekt durch eine Höhenbewegung des Liftwagens auf der Schaufel aufliegt. Durch eine Höhen- und Rotationspositionierung wird die Schaufel mit dem Lagerobjekt zur inneren Transferposition **72** gefahren, an der das Lagerobjekt von der Transfervorrichtung **7** übernommen wird. Mit geladenem Lagerobjekt verfährt die Transfervorrichtung **7** in die äussere Transferposition **73,** in der von einem externen System auf das Lagerobjekt zugegriffen werden kann.

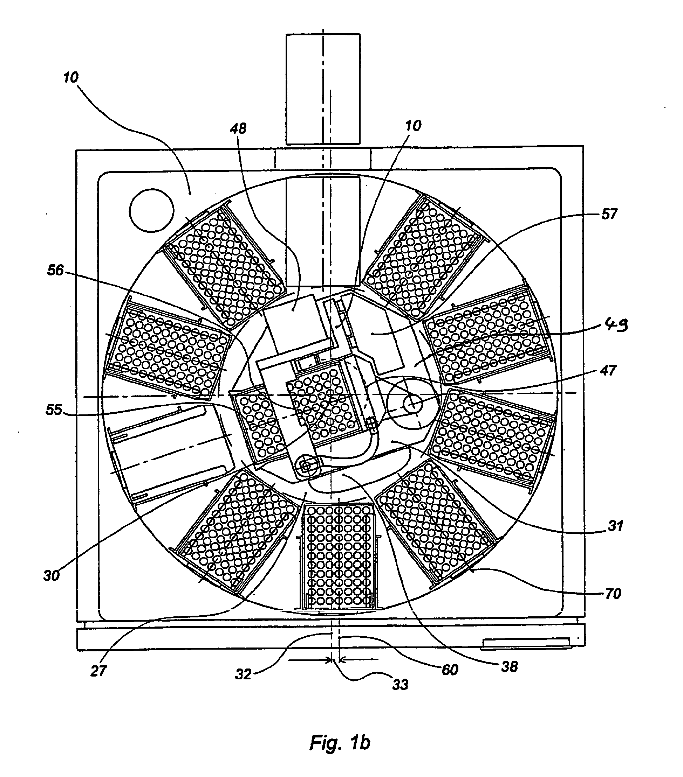

Die **Fig. 1b** stellt in einer Aufsicht ein weiteres Ausführungsbeispiel einer erfindungsgemässen Anordnung dar. Die Komponenten des Transportsystems und die Lagerschächte sind hier so vorteilhaft angeordnet, dass das gesamte Transportsystem innerhalb des Innenraums **27** untergebracht ist. Dazu sind die Lagerschächte jeweils tangential um einen horizontalen Versatz **33** von einem durch das Rotationszentrum verlaufenden Strahl **32** verschoben. Die Symmetrieachsen bzw. Mittelachsen **60** der Lagerstellen der Lagerschächte verlaufen hierbei parallel zu den Strahlen **32**. Die Schaufelsymmetrieachse **55** ist ebenfalls um den Versatz aus dem Rotationszentrum verschoben. Dies erlaubt es, die Schaufel versetzt zum Zentrum anzuordnen, so dass auf einer Seite der Schaufel mehr Platz für die übrigen Komponenten bleibt. Die Liftsäule und der Liftantrieb sind nun unmittelbar neben der Liftplatte auf einer Liftgrundplatte **31** angeordnet, die um ein Lager F drehbar ist. Der Rotationsantrieb rotiert die Liftgrundplatte samt Liftsäule, Liftwagen und Rotationsantrieb um das Rotationszentrum. Um Erschütterungen während der Rotation zu vermeiden ist eine Gegengewicht **38** an der Liftgrundplatte angeordnet. Durch ein zweites Gegengewicht im oberen Bereich kann eine dynamische Wuchtung erzielt werden. Generell kann eine Auswuchtung der Beschickungsvorrichtung mittels Gegengewichten oder geeigneter Anordnung der einzelnen Komponenten erzielt werden.

In der **Fig. 1c** ist eine Frontansicht in teilweiser Schnittdarstellung des vorherigen Ausführungsbeispiels dargestellt. Damit die Schaufel die untersten Lagerobjekte laden kann, weisen Drehteller und Grundplatte eine Drehtellervertiefung **23** auf, in die der Liftwagen gefahren werden kann. Somit nimmt die Drehtellervertiefung **23** (bzw. eine entsprechende Öffnung im Drehteller) einen Teil des Transportsystems auf. Um die verwendbare Höhe der Lagerschächte optimal zu nutzen, ist der Rotationsantrieb im oberen Teil des Lagersystems angeordnet. Durch eine Aussparung **56** im Joch des Liftwagens für das Rotationsritzel **47** (vgl. Fig. 1b) wird zusätzlich nutzbare Höhe gewonnen. Der Rotationsantrieb **43** ist so angeordnet, dass er in der oberen Lage Freiraum innerhalb des Liftwagens einnimmt.

In **Fig. 2a** ist eine Detaildarstellung des Schaufelantriebs bei zurückgezogener Schaufel dargestellt. Die Schaufel ist auf einer Linearführung **39** montiert und in radialer Richtung verschiebbar. Die Verschiebung geschieht über einen schwenkbaren Schaufelarm **45**, dessen eine Seite an der Achse des Schaufelantriebs **44** befestigt ist. Der Schaufelarm kann etwa um eine halbe Umdrehung rotieren. Am anderen Ende des Schaufelarms befindet sich ein Armlager **59.** Das Armlager läuft in einer quer zur Bewegungsrichtung der Schaufel und am hinteren Ende der Schaufel angeordneten Schaufelnut **58.** Beim Drehen des Schaufelarms bewegt dieser die Schaufel über die Schaufelnut.

In **Fig. 2b** ist der Schaufelantrieb in leicht ausgefahrenem zustand dargestellt. Damit der Schaufelarm, der sich auf gleicher Höhe wie das Lagerobjekt befindet, bei seiner Bewegung nicht mit dem Lagerobjekt kollidiert, ist er gebogen, d.h. er besitzt einen gekrümmten und/oder abgewinkelten Verlauf. Die Verwendung des Schaufelarms hat zum Vorteil, dass auf einfache Weise, ein weiches Beschleunigen bzw. Abbremsen realisiert wird. Diese Lösung ist weitgehend unempfindlich gegen Verschmutzung oder Bereifung.

Schliesslich ist der Schaufelantrieb stationär, was eine bewegliche Energiezufuhr zum Schaufelantrieb überflüssig macht.

In **Fig. 2c** ist ein weiteres Ausführungsbeispiel zu einem Schaufelantrieb dargestellt, das - beispielsweise - einen Zahnriemen **52** oder eine andere Art von Antriebsriemen zum Antrieb der Schaufel verwendet. Der Zahnriemen wird über vier Umlenkrollen einerseits, andererseits um das Antriebsriemenrad geführt, und zwar so, dass er in einem Bereich im wesentlichen parallel zur Führungsschiene der Schaufel, d.h. zur Ausfahrrichtung der Schaufel, läuft. In diesem Bereich ist der Zahnriemen mit der Schaufel gekoppelt, so dass er diese ein- und ausfahren kann Auch hier ist der Schaufelantrieb stationär.

Die **Fig. 2d** zeigt ein Ausführungsbeispiel zu einem Schaufelantrieb mit geradem Schaufelarm. Um den Höhenverlust bedingt durch die Bewegung des Schaufelarms über dem Lagerobjekt ist der Schaufelarm so ausgestaltet, dass er im Bereich der Überschneidung mit dem Lagerobjekt bei der Bewegung, eine Ausnehmung **150** aufweist. Da der Schaufelarm weit auslagert ist am Schaufelantrieb ein Joch **151** zur Erhöhung der Stabilität angeordnet. An einer Verlängerung **152** ist das Armlager nach unten versetzt angeordnet.

Die **Fig. 3a** zeigt eine Aufsicht eines Ausführungsbeispiels eines erfindungsgemässen Lagerschachtes. An einem Schachtboden **63** sind zwei Schachtseitenwände **67** und eine Schachtrückwand **66** befestigt. Die der Schachtrückwand gegenüberliegende Beladeseite ist offen. An den Schachtseitenwänden sind paarweise Stege **64** angeordnet. Auf den Stegen liegen die Lagerobjekte innerhalb des Lagerschachtes auf. Horizontal sind die Lagerobjekte seitlich von den Schachtseitenwänden, rückwärtig von der Schachtrückwand, gehalten. In Richtung der offenen Beladeseite sind die Lagerobjekte von Steglaschen **65** gehalten. Jeweils eine Steglasche befindet sich an dem der Schachtrückwand zuwandten Ende eines Steges und ist als einstückig mit dem Steg verbundene, nach oben abgewinkelte Zunge ausgestaltet. Vorzugsweise steigen die Zungen vom Rotationszentrum ausgehend an, so dass sie eine Anlauframpe für manuell eingeschobene Lagerobjekte bilden.

Die Längen der Seitenwände und Stege sind kürzer als die der Lagerobjekte, so, dass die Lagerobjekte im Bereich der Beladeseite gegen das Rotationszentrum hin frei über die Seitenwände und Stege herausragen. Diese Längen sind hierbei um soviel kürzer, dass der Abstand zwischen den Stegen bzw. den Seitenwänden zweier benachbarter Lagerschächte grösser oder gleich ist, als der Abstand zwischen zwei äusseren Objektenden **92** benachbarter Lagerobjekte. Bei der sternförmigen Anordnung der Lagerschächte erlaubt dies eine optimale Raumnutzung.

Die **Fig. 3b** zeigt eine Seitenansicht des Lagerschachtes. An einer Griffplatte **61** sind die Schachtseitenwände und die Schachtrückwand an deren oberen Ende befestigt. Die Steglaschen sind als aufgebogene Segmente jeweils eines Steges geformt. Die Steglasche weist eine nach oben über die Stegoberseite hinausragende und der Schachtrückwand zugewandte Kante auf, an der die Innenwand des Lagerobjektes anliegt. Andere Ausführungen von Steglaschen - beispielsweise mit aufgepressten Elementen - sind auch denkbar.

Die folgenden Figuren zeigen Ausführungsbeispiele zur Übergabe der Objekte an die äussere Transferposition.

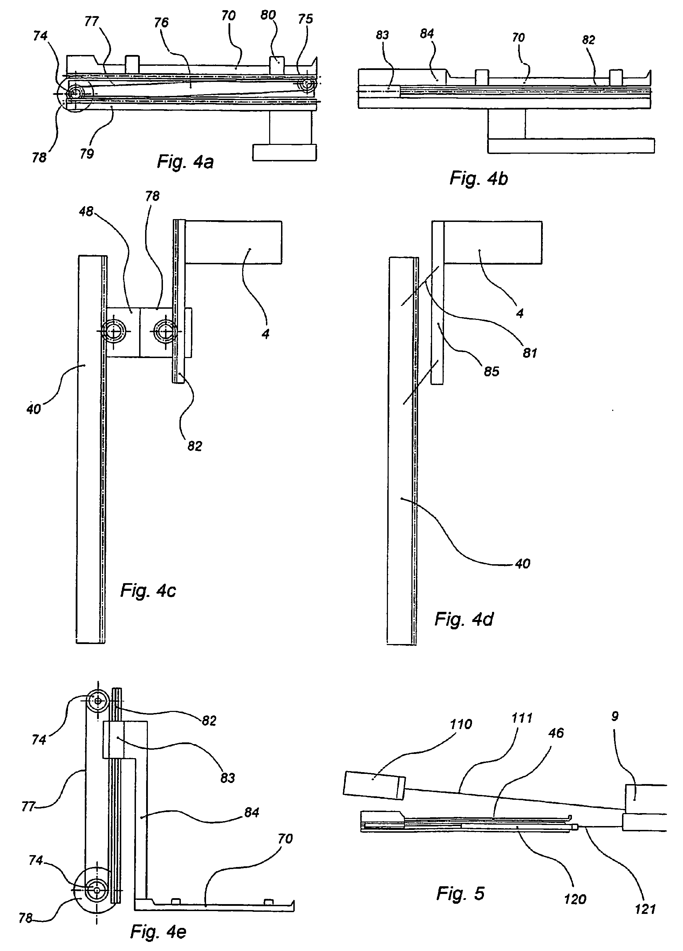

**Fig. 4a** stellt ein horizontal teleskopartig verfahrbares Ausführungsbeispiel einer Transfervorrichtung dar. Eine Übergabeplatte **70** ist linear verschiebbar auf einem Wagen **76** angeordnet. Die Übergabeplatte trägt das eigentliche Lagerobjekt, das mittels Zentrierelement **80** gegen seitliches Verrutschen geschützt ist. Der Wagen ist seinerseits linear verfahrbar auf einer stationären Übergabebasis **79** angeordnet und ist, über ein Übergabeantriebsrad **74,** an dem ein Übergabeantriebsmotor **78** angeordnet ist, bewegbar. Die Übergabeplatte ist über ein zweites Antriebsrad **75** angetrieben. Beide Antriebsräder sind auf dem Wagen angeordnet und mit einem Übergaberiemen **77** miteinander synchron verbunden. Durch diese Anordnung ist die Transfervorrichtung über eine relativ grosse Distanz verfahrbar, ohne dass Führungselemente über die Grundfläche der Übergabe herausragen.

Bei der in der **Fig. 4b** dargestellten Transfervorrichtung ist ein Übergabeschlitten **83** auf einer Übergabeführung **82** angeordnet. Der Verfahrweg der Übergabeplatte ist dadurch verlängert, dass der Übergabeschlitten rückseitig an der Übergabeplatte angeordnet ist und die Übergabeplatte nach hinten - mittels einer Übergabeverlängerung **84** - verlängert ist.

Die **Fig. 4c** zeigt eine Ausführung, bei welcher die Lagerobjekte von der Beschickungsvorrichtung in vertikaler Richtung zur äusseren Transferposition gebracht werden. Bei dieser Anordnung ist eine Übergabeführung **82** am Liftwagen vertikal verfahrbar angeordnet. Durch Verfahren der Liftverlängerung - mittels eines Übergabeantriebsmotors - kann die Schaufel teleksopartig über die Lifthöhe hinausgefahren werden. Eine solche Anordnung ist notwendig, wenn die Lagerobjekte nach oben an das umgebende System übergeben werden sollen.

Ein weiteres Ausführungsbeispiel, bei welchem die Lagerobjekte von der Beschickungsvorrichtung nach oben an die äussere Transferposition gebracht werden, ist in **Fig. 4d** dargestellt. Eine Liftverlängerung **85** ist über Wippen **81** realisiert, die, mit der Säule **40** und der Liftverlängerung, ein Parallelogramm bilden. Mittels eines nicht dargestellten Antriebs wird die Liftverlängerung bei einer Übergabe nach oben gefahren.

Auch das in der **Fig. 4e** dargestellte Ausführungsbeispiel dient der Übergabe des Lagerobjektes nach oben. Bei diesem Ausführungsbeispiel ist die Übergabebewegung von der inneren zu der äusseren Übergabeposition wieder in der Transfervorrichtung implementiert, die höher als der Lift (z.B. an der Decke eines Klimaschranks montiert) angeordnet wird. Die Übergabeplatte ist am unteren Ende der Übergabeverlängerung **84** angeordnet. Das obere Ende der Übergabeverlängerung ist am Übergabeschlitten **83** befestigt. Der Übergabeschlitten läuft auf der vertikal verlaufenden Übergabeführung **82.** Der Antrieb des Übergabeschlittens geschieht in diesem Ausführungsbeispiel mittels eines Übergaberiemens **77.** Eine Spindel ist für diese Höhenbewegung ebenfalls möglich.

Besonders vorteilhaft ist es, auf dem Liftwagen eine Lesevorrichtung für die Erkennung und die Identifizierung der Lagerobjekte anzuordnen. In der **Fig. 5** ist eine solche Anordnung dargestellt. Im Bereich der Transportschaufel ist ein Plattensensor **120** angeordnet, dessen Platten Lesestrahl **121** in gleicher Richtung wie die Fahrrichtung der Transportschaufel gerichtet ist. Es ist ferner ein Barcodeleser **110** vorgesehen, der Strichcode am Lagerobjekt in etwa auf der Zugriffshöhe zu lesen vermag. Durch die Kombination eines Barcode Lesers mit einem Plattensensor kann der gesamte Lagerinhalt - auch im Falle eines fehlenden oder nicht lesbaren Barcodes - erfasst werden. Durch den Plattensensor können ferner Kollisionen in Falle eines Fehlzugriffs dadurch verhindert werden, dass vor dem Ausfahren der Transportschaufel das Nicht-Vorhandensein eines Lagerobjektes an der entsprechenden Stelle geprüft wird.

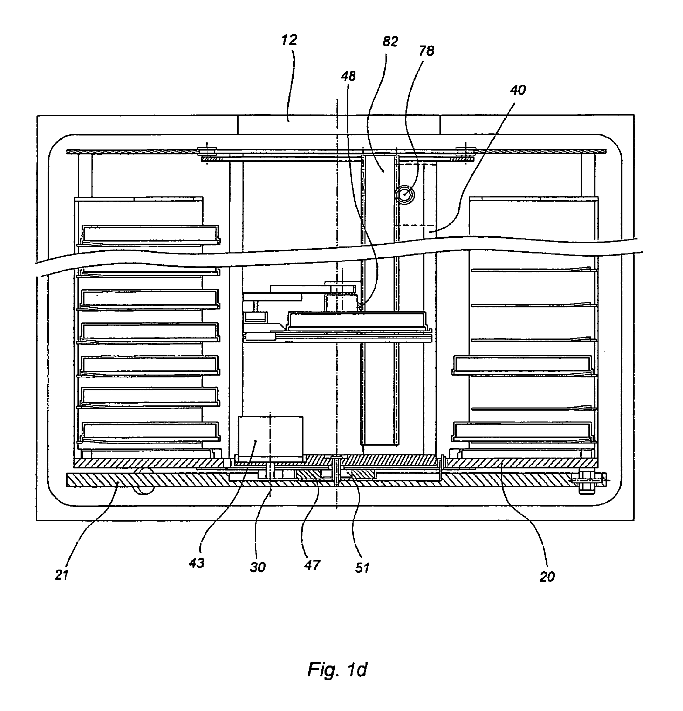

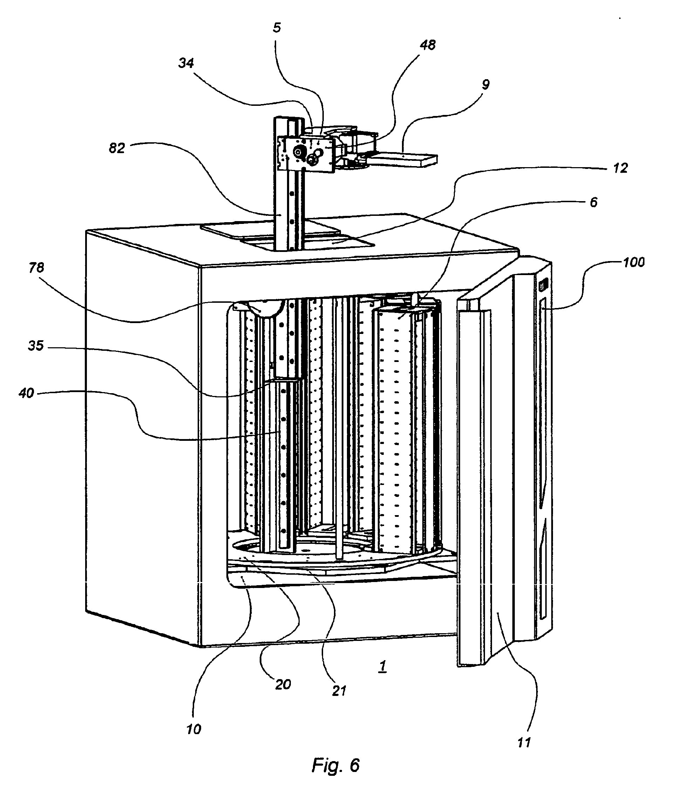

Fig. 1d und 6 zeigen einen Klimaschrank, der mit üblichen Bedien- und Interfacegeräten ausgestattet sein kann. Insbesondere kann er auch eine alphanumerische Anzeige **100** aufweisen, auf welcher Statusmeldungen, Fehlermeldungen oder dergleichen dargestellt werden können. Die Meldungen können von der Steuerung des Klimaschranks stammen, oder von einem übergeordneten System, das über ein Interface mit dem Klimaschrank verbunden ist.

Bei dem in diesen Figuren dargestellten Klimaschrank ist die Übergabestelle oberhalb des Gerätes. Hierfür ist die Beschickungsvorrichtung mit einem Teleskopmechanismus nach oben aus dem Gerät ausfahrbar, so dass die Bauhöhe des Geräts nicht erhöht werden muss. In der dargestellten Ausführung ist an der Liftsäule 40 eine relativ zu ihr senkrecht verfahrbare Übergabeführung 82 angeordnet, an welcher der Liftwagen 5 verfahrbar angeordnet ist und die dessen Verfahrweg verlängert. Die Übergabeführung 82 wird durch die in dieser Ausführung an der Decke des Nutzraums angeordnete Schleuse 12 gefahren. Ein Übergabeantriebsmotor zum Antrieb der Übergabeführung 82 ist kraftschlüssig mit der Liftsäule 40 verbunden.

Der beschriebene Teleskopmechanismus zur vertikalen Übergabe der Lagerobjekte ist auch zur Verwendung in Klimaschränken geeignet, bei denen die Lagerschächte nicht in einem Kreis angeordnet sind, d.h. auch bei Klimaschränken der in US 6 478 524 gezeigten Art.

Der Liftantrieb ist auf der Übergabeführung 82 angeordnet. Der Liftantrieb verfügt über ein Untersetzungsgetriebe **34**, das als Zahnriemengetriebe ausgeführt ist. Durch das Getriebe kann ein vertikal bewegtes Gegengewicht entfallen. Die Reibung im Zahnriemengetriebe vermag zudem den Liftwagen 5 im Falle eines Stromausfalls soweit zu bremsen, dass dieser mit zulässiger Geschwindigkeit nach unten fährt. Ein an unteren Ende der Übergabeführung 82 angeordneter Anschlagsstop **35** verhindert, dass der Liftwagen 5 nach unten herausfallen kann. Der Liftwagen 5 lässt sich in der Höhe der äusseren Transferposition rotieren. Dadurch können mehrere äussere Transferpositionen implementiert werden. Selbstverständlich kann sich die Schleuse auch an der Unterseite des Klimaschrankes angeordnet sein. In diesem Falle befindet sich die äussere Transferposition unterhalb des Klimaschrankes.

In den soweit beschriebenen Ausführungsbeispielen ist die Beschickungsvorrichtung automatisch drehbar, und die Lageranordnung manuell. Es ist jedoch auch denkbar, die Lageranordnung automatisch drehbar auszugestalten.

### BEZUGZEICHENVERZEICHNIS

| | |
|---|---|
| Klimaschrank 1 | Ausgleichsgewicht 57 |
| Nutzraum 10 | Schaufelantrieb 58 |
| Fronttüre 11 | Schaufelnut 58a |
| Schleuse 12 | Armlager 59 |
| Lagersystem 2 | Lagerschacht 6 |
| Drehteller 20 | Schachtsymmetrieachse 60 |
| Grundplatte 21 | Griffplatte 61 |
| Drehtellerantrieb 22 | Schachthalter 62 |
| Drehtellervertiefung 23 | Schachtboden 63 |
| Drehtellerzentrierlager 24 | Steg 64 |
| Drehtellerachse 25 | Steglasche 65 |
| Spannplatte 26 | Schachtrückwand 66 |
| Innenraum 27 | Schachtseitenwand 67 |
| Strebe 28 | Beladeseite 68 |
| Decke 29 | Transfervorrichtung 7 |
| Rotationszentrum 30 | Übergabeplatte 70 |
| Liftgrundplatte 31 | Lücke 71 |
| Strahl 32 | Innere Transferposition 72 |
| Versatz 33 | Äussere Transferposition 73 |
| Untersetzungsgetriebe 34 | Übergabeantriebsrad 74 |
| Anschlagsstop 35 | Zweites Antriebsrad 75 |
| Gegengewicht 38 | Wagen 76 |
| Linearführung 39 | Übergaberiemen 77 |
| Transportsystem 4 | Übergabeantriebsmotor 78 |
| Liftsäule 40 | Übergabebasis 79 |
| Lifttragarm 41 | Zentrierelement 80 |
| Rotationszentrum 42 | Wippe 81 |
| Rotationsantrieb 43 | Übergabeführung 82 |
| Schaufelantrieb 44 | Übergabeschlitten 83 |
| Schaufelarm 45 | Übergabeverlängerung 84 |
| Schaufel 46 | Liftverlängerung 85 |
| Rotationsritzel 47 | Lagerobjekt 9 |
| Liftantrieb 48 | Innere Objektecke 91 |
| Liftplatte 49 | Äussere Objektecke 92 |
| Liftwagen 5 | Anzeige 100 |
| Armbogen 50 | Barcodeleser 110 |
| Oberes Rotationslager 51 | Barcode Lesestrahl 111 |
| Zahnriemen 52 | Plattensensor 120 |
| Strebe 53 | Platten Lesestrahl 121 |
| Unteres Rotationslager 54 | Ausnehmung 150 |
| Schaufelsymmetrieachse 55 | Joch 151 |
| Aussparung 56 | |

## Patentansprüche

1. Klimaschrank mit einem Lagersystem (2) mit einer Lageranordnung **(6)** zur Aufnahme von Lagerobjekten **(9)** und mit einem automatischen Transportsystem **(4)** zum Transport der Lagerobjekte, wobei die Lageranordnung (6) entnehmbare Lagerschächte aufweist, wobei jeder Lagerschacht übereinander anordnete Lagerstellen für Lagerobjekte aufweist, wobei das Transportsystem eine Beschickungsvorrichtung **(45, 46)** zum Ein- und Auslagern der Lagerobjekte in das bzw. aus der Lageranordnung aufweist, wobei die Lageranordnung **(6)** ringförmig um einen Innenraum angeordnet ist, wobei die Beschickungsvorrichtung (45, 46) im Innenraum der Lageranordnung angeordnet ist und wobei die Lageranordnung (6) um ein Rotationszentrum (30) drehbar ist, **dadurch gekennzeichnet, dass** die Beschickungsvorrichtung (45, 46) ebenfalls um das Rotationszentrum (30) drehbar ist.

2. Klimaschrank nach Anspruch 1,
**dadurch gekennzeichnet, dass**
die ringförmige Lageranordnung ein Lücke **(71)** aufweist, durch die die Lagerobjekte zwischen der Lageranordnung und einer äusseren Transferposition, insbesondere ausserhalb der Lageranordnung, verfahrbar sind.

3. Klimaschrank nach einem der vorangehenden Ansprüche,
**dadurch gekennzeichnet, dass**
zusätzlich zur Beschickungsvorrichtung eine Transfervorrichtung (7) vorgesehen ist um die Lagerobjekte zwischen einer inneren Transferposition im Bereich der Lageranordnung und einer äusseren Transferposition ausserhalb der Lageranordnung zu verfahren, und insbesondere dass die Transfervorrichtung ausgestaltet ist, um die Lagerobjekte horizontal oder vertikal zu verfahren.

4. Klimaschrank nach einem der Ansprüche 1 und 2
**dadurch gekennzeichnet, dass**
die Beschickungsvorrichtung ausgestaltet ist um die Lagerobjekte, insbesondere horizontal oder vertikal, von bzw. zu einer äusseren Transferposition ausserhalb der Lageranordnung zu transportieren.

5. Klimaschrank nach einem der vorangehenden Ansprüche,
**dadurch gekennzeichnet, dass**
Mittelachsen der Lagerstelle parallel und um einen horizontalen Versatz **(33)** beabstandet zu durch das Rotationszentrum verlaufenden Strahlen **(32)** liegen, und insbesondere dass das Beschickungssystem eine ausfahrbare Schaufel aufweist, wobei eine Mittelachse der Schaufel um den Versatz vom Rotationszentrum beabstandet ist.

6. Klimaschrank nach einem der vorangehenden Ansprüche,
**dadurch gekennzeichnet, dass**
die Lagerschächte derart ausgestaltet sind, dass in den Lagerstellen angeordnete Lagerobjekte gegen das Rotationszentrum hin über die Lagerschächte herausragen, und insbesondere dass jeder Lagerschacht Seitenwände und/oder Stege aufweist, wobei die Seitenwände und/oder die Stege kürzer sind als eine Länge der Lagerobjekte.

7. Klimaschrank nach einem der vorangehenden Ansprüche, **dadurch gekennzeichnet, dass** die Lagerschächte Stege zur Aufnahme der Lagerobjekte aufweisen, und dass an den Stegen an einem vom Rotationszentrum abgewandten Ende jeweils eine Erhöhung, insbesondere eine Steglasche **(65),** zum Halten des Lagerobjektes angeordnet ist, und insbesondere dass die Erhöhung als nach oben abgewinkelte, vorzugsweise vom Rotationszentrum weg ansteigende, Zunge ausgebildet ist, die einstückig mit dem Steg verbunden ist.

8. Klimaschrank nach einem der vorangehenden Ansprüche,
**dadurch gekennzeichnet, dass**
die Beschickungsvorrichtung um das Rotationszentrum **(30)** drehbar ist, und insbesondere dass sie um mindestens 200° drehbar ist, vorzugsweise um im wesentlichen 360°.

9. Klimaschrank nach einem der vorangehenden Ansprüche,
**dadurch gekennzeichnet, dass**
die Lageranordnung **(6)** auf einem um das Rotationszentrum **(30)** drehbaren Drehteller angeordnet ist, und dass in einem Zentrum des Drehtellers eine Vertiefung oder Öffnung **(23)** zur Aufnahme eines Teils des Transportsystems vorgesehen ist.

10. Klimaschrank nach einem der vorangehenden Ansprüche,
**dadurch gekennzeichnet, dass**
das Transportsystem einen Rotationsantrieb **(43)** und ein Rotationsritzel zum Drehen der Beschickungsvorrichtung um das Rotationszentrum **(30)** aufweist, wobei der Rotationsantrieb rotierbar und das Rotationsritzel stationär angeordnet ist.

11. Klimaschrank nach einem der vorangehenden Ansprüche,
**dadurch gekennzeichnet, dass**
das Transportsystem eine Liftsäule und einen an der Liftsäule angeordneten, vertikal verschiebbaren Liftwagen **(5)** aufweist, wobei der Liftwagen die Beschickungsvorrichtung trägt, wobei die Liftsäule ausserhalb der ringförmigen Lageranordnung angeordnet ist und wobei zwischen Liftsäule und Beschickungsvorrichtung ein Lifttragarm **(41)** angeordnet ist, und dass der Liftarm in einer Lücke der ringförmigen Lageranordnung vertikal verfahrbar ist.

12. Klimaschrank nach einem der vorangehenden Ansprüche,
**dadurch gekennzeichnet, dass**
die Beschickungsvorrichtung eine horizontal ausfahrbare Schaufel (46), einen schwenkbaren Armbogen (50) zum Aus- und Einfahren der Schaufel und einen seitlich der Schaufel angeordneten Antrieb zum Schwenken des Armbogens (50) aufweist,
und dass der Armbogen zur Vermeidung einer Kollision mit einem auf gleicher Höhe auf der Schaufel angeordneten Lagerobjekt gebogen ist,
und/oder dass der Armbogen an einem Ende beweglich in einem Armlager **(59),** insbesondere in einer Nut (58), angeordnet ist, welches quer zu einer Ausfahrrichtung der Schaufel verläuft.

13. Klimaschrank nach einem der vorangehenden Ansprüche,
**dadurch gekennzeichnet, dass**
die Beschickungsvorrichtung eine horizontal ausfahrbare Schaufel **(46),** einen Antriebsriemen **(52)** und einen Schaufelantrieb **(44)** aufweist, wobei der Antriebsriemen vom Schaufelantrieb angetrieben ist, in einem Bereich im wesentlichen parallel zu einer Ausfahrrichtung der Schaufel verläuft und in diesem Bereich mit der Schaufel gekoppelt ist.

14. Klimaschrank nach einem der vorangehenden Ansprüche,
**dadurch gekennzeichnet, dass**
das Transportsystem eine Liftsäule und einen an der Liftsäule angeordneten, vertikal verschiebbaren Liftwagen **(5)** aufweist, wobei zum Antrieb des Liftwagens am Liftwagen ein Untersetzungsgetriebe **(34)** angeordnet ist, und insbesondere dass das Untersetzungsgetriebe als Riemengetriebe ausgeführt ist.

15. Klimaschrank nach einem der vorangehenden Ansprüche,
**dadurch gekennzeichnet, dass** die Beschickungsvorrichtung und allfällige weitere sich um das Rotationszentrum drehende Teile des Transportsystems (4) bezüglich Drehungen um das Rotationszentrum ausgewuchtet ist bzw. sind, und insbesondere dass an ein Gegengewicht **(38)** vorgesehen ist das die Unwucht bezüglich des Rotationszentrums ausgleicht.

16. Klimaschrank nach einem der vorangehenden Ansprüche
**dadurch gekennzeichnet, dass**
am Liftwagen ein Barcodeleser **(110)** und/oder ein Plattensensor **(120)** angeordnet sind, und insbesondere dass deren Lesestrahlen **(111, 121)** in der Fahrrichtung einer Transportschaufel der Beschickungsvorrichtung gerichtet sind.

17. Klimaschrank nach einem der vorangehenden Ansprüche,
**dadurch gekennzeichnet, dass**
am Klimaschrank eine Schleuse **(12)** angeordnet ist durch die die Lagerobjekte zwischen der Lageranordnung und einer aus**serhalb** des Klimaschranks angeordneten äusseren Übergabeposition **(73)** transportiert werden, die automatisch betätigbar ist, und insbesondere dass die Abmessungen der Schleuse denjenigen der Lagerobjekte angepasst ist.

18. Klimaschrank nach Anspruch 17
**dadurch gekennzeichnet, dass**
die Schleuse **(12)** an einer Decke oder einem Boden des Klimaschrankes angeordnet ist.

19. Klimaschrank nach Anspruch 18
**dadurch gekennzeichnet, dass**
er einen Teleskopmechanismus (40, 82) aufweist, und insbesondere dass er eine Liftsäule (40), eine verfahrbar auf der Liftsäule (40) angeordnete Übergabeführung (82) und einen verfahrbar auf der Übergabeführung (82) angeordneten Liftwagen (5) aufweist.

20. Klimaschrank nach einem der vorangehenden Ansprüche,
**dadurch gekennzeichnet, dass**
am Klimaschrank eine Fronttüre **(11)** angeordnet ist, deren Abmessungen in etwa den einer Seitenfläche des Klimaschrankes entsprechen.

## Claims

1. Climate chamber with a storage system (2) with a storage arrangement (6) for receiving storage objects (9) and with an automatic transport system (4) for transporting the storage objects, wherein the storage arrangement (6) has removable storage racks, wherein each storage rack has storage positions for storage objects, arranged on top of one another, wherein the transport system has a charging device (45, 46) for storing and removing the storage objects into or out of the storage arrangement respectively, wherein the storage arrangement (6) is arranged in annular manner around an inner space, wherein the charging device (45, 46) is arranged in the inner space of the storage arrangement and wherein the storage arrangement (6) is rotatable around a center of rotation (30), **characterized in that** the charging device (45, 46) is also rotatable around the center of rotation (30).

2. Climate chamber according to claim 1, **characterized in that** the annular storage arrangement has a gap (71) through which the storage objects are moved between the storage arrangement and an outer transfer position, particularly outside the storage arrangement.

3. Climate chamber according to one of the preceding claims, **characterized in that** a transfer device (7) is provided additionally to the charging device in order to move the storage objects between an inner transfer position in the area of the storage arrangement and an outer transfer position outside the storage arrangement, and particularly **in that** the transfer device is adapted to move the storage objects horizontally or vertically.

4. Climate chamber according to one of the claims 1 and 2, **characterized in that** the charging device is adapted to transport the storage objects, particularly horizontally or vertically, from or to an outer transfer position respectively, outside the storage arrangement.

5. Climate chamber according to one of the preceding claims, **characterized in that** middle axes of the storage position are arranged parallel and spaced by a horizontal spacing (33) from rays (32) running through the center of rotation, and particularly **in that** the charging system has a extendable blade, wherein the a middle axis of the blade is spaced from the center of rotation by the spacing.

6. Climate chamber according to one of the preceding claims, **characterized in that** the storage racks are formed in such a way that storage objects arranged in the storage positions protrude beyond the storage racks against the center of rotation, and particularly **in that** each storage rack has side walls and/or bridges, wherein the side walls and/or bridges are shorter than a length of the storage objects.

7. Climate chamber according to one of the preceding claims, **characterized in that** the storage racks have bridges for receiving the storage objects, and **in that** an elevation, particularly a bridge strap (65), for holding the storage object is arranged at the bridges at an end opposite of the center of rotation, and particularly **in that** the elevation is formed as a tongue angled upwards, preferably rising away from the center of rotation, being connected in one piece with the bridge.

8. Climate chamber according to one of the preceding claims, **characterized in that** the charging device is rotatable around the center of rotation (30), and particularly **in that** it is rotatable around at least 200°, preferably around substantially 360°.

9. Climate chamber according to one of the preceding claims, **characterized in that** the storage arrangement (6) is arranged on a rotating plate which is rotatable around the center of rotation (30) and **in that** a cavity or opening (23) for receiving a part of the transport system is provided in a center of the rotating plate.

10. Climate chamber according to one of the preceding claims, **characterized in that** the transport system has a rotational actuator (43) and a rotational pinion for rotating the charging device around the center of rotation (30), wherein the rotational actuator is arranged in a rotatable way and the rotational pinion in a stationary way.

11. Climate chamber according to one of the preceding claims, **characterized in that** the transport system has a lift pillar and a horizontally shiftable lift carriage (5) arranged at the lift pillar, wherein the lift carriage carries the charging device, wherein the lift pillar is arranged outside the annular storage arrangement and wherein a lift support arm (41) is arranged between the lift pillar and the charging device, and **in that** the lift arm is vertically movable in a gap of the annular storage arrangement.

12. Climate chamber according to one of the preceding claims, **characterized in that** the charging device has a horizontally extendable blade (46), a pivotable arm curvature (50) for moving out and moving in the blade and an actuator for pivoting the arm curvature (50), arranged at the side of the blade, and **in that** the arm curvature is curved in order to avoid a collision with a storage object arranged at the same height on the blade, and/or **in that** the arm curvature is arranged in a movable way at an end in an arm support (59), particularly in a groove (58), which runs transversally with respect to a move out direction of the blade.

13. Climate chamber according to one of the preceding claims, **characterized in that** the charging device has a horizontally extendable blade (46), a transmission belt (52) and a bladed propulsor (44), wherein the transmission belt is actuated by the bladed propulsor, is arranged in an area substantially parallel to the move out direction of the blade and is coupled with the blade in this area.

14. Climate chamber according to one of the preceding claims, **characterized in that** the transport system has a lift pillar and a vertically shiftable lift carriage (5) which is arranged at the lift pillar, wherein a reduction gear (34) for actuating the lift carriage is arranged at the lift carriage, and particularly **in that** the reduction gear is executed as a belt gear.

15. Climate chamber according to one of the preceding claims, **characterized in that** the charging device and potential further parts of the transport system (4) which rotate around the center of rotation is or are respectively, balanced with respect to rotations around the center of rotation, and particularly **in that** a counterweight (38) is provided, which compensates the unbalanced mass with respect to the center of rotation.

16. Climate chamber according to one of the preceding claims, **characterized in that** a bar code reader (110) and/or a plate sensor (120) are arranged at the lift carriage, and particularly **in that** their reading rays (111, 121) are oriented in the travel direction of a transport blade of the charging device.

17. Climate chamber according to one of the preceding claims, **characterized in that** a lock (12) is arranged at the climate chamber, through which the storage objects are transported between the storage arrangement and an outer transfer position (73) arranged outside the climate chamber, which is operated automatically, and particularly **in that** the dimensions of the lock are adjusted to the ones of the storage objects.

18. Climate chamber according to claim 17, **characterized in that** the lock (12) is arranged at a ceiling or a floor of the climate chamber.

19. Climate chamber according to claim 18, **characterized in that** it has a telescope mechanism (40, 82), and particularly **in that** it has a lift pillar (40), a transfer guidance (82) arranged in a movable way on the lift pillar (40) and a lift carriage (5) arranged in a movable way on the transfer guidance (82).

20. Climate chamber according to one of the preceding claims, **characterized in that** a front door (11) is arranged at the climate chamber, the dimensions of which correspond to the one of a side surface of the climate chamber.

## Revendications

1. Chambre climatique avec un système de stockage (2) avec un arrangement de stockage (6) pour recevoir des objets à stocker (9) et avec un système automatique de transport (4) pour transporter les objets à stocker, l'arrangement de stockage (6) ayant des chambres de stockage retirables, chaque chambre de stockage ayant des positions de stockage, arrangées de manière superposée, pour des objets à stocker, le système de transport ayant un dispositif de chargement (45, 46) pour stocker et retirer les objets à stocker dans ou bien de l'arrangement de stockage, l'arrangement de stockage (6) étant arrangé de manière annulaire autour d'un espace intérieur, le dispositif de chargement (45, 46) étant arrangé dans l'espace intérieur de l'arrangement de stockage et l'arrangement de stockage (6) étant rotative autour d'un centre de rotation (30), **caractérisée en ce que** le dispositif de chargement (45, 46) est aussi rotatif autour du centre de rotation (30).

2. Chambre climatique selon la revendication 1, **caractérisée en ce que** l'arrangement de stockage annulaire a une niche (71) à travers de laquelle les objets à stocker sont déplaçables entre l'arrangement de stockage et une position extérieure de transfert, particulièrement hors de l'arrangement de stockage.

3. Chambre climatique selon l'une des revendications précédentes, **caractérisée en ce qu'**un dispositif de transfert (7) est prévu en plus du dispositif de chargement afin de déplacer les objets à stocker entre une position de transfert intérieure dans la zone de l'arrangement de stockage et une position de transfert extérieure hors de l'arrangement de stockage, et particulièrement **en ce que** le dispositif de transfert est adapté à déplacer les objets à stocker horizontalement ou verticalement.

4. Chambre climatique selon l'une des revendications 1 ou 2, **caractérisée en ce que** le dispositif de chargement est adapté à transporter les objets à stocker, particulièrement horizontalement ou verticalement, d'un ou bien à une position de transfert extérieure hors de l'arrangement de stockage.

5. Chambre climatique selon l'une des revendications précédentes, **caractérisée en ce que** des axes moyennes de la position de stockage sont parallèles et situés à une distance (33) horizontale des rayons (32) qui passent à travers du centre de rotation, et particulièrement **en ce que** le système de chargement a une pale escamotable, un axe moyen de la pale étant espacé suivant la distance du centre de rotation.

6. Chambre climatique selon l'une des revendications précédentes, **caractérisée en ce que** des chambres de stockage sont formées de manière que les objets à stocker arrangés dans les positions de stockage font saillie des chambres de stockage dans une direction contraire au centre de rotation, et particulièrement **en ce que** chaque chambre de stockage a des parois latérales et/ou des traverses, les parois latérales et/ou les traverses étant plus courtes qu'une longueur des objets à stocker.

7. Chambre climatique selon l'une des revendications précédentes, **caractérisée en ce que** les chambres de stockage ont des traverses pour recevoir des objets à stocker, et **en ce qu'**une surélévation, particulièrement une languette de traverse (65), pour soutenir l'objet à stocker, est arrangée aux traverses à une extrémité opposée du centre de rotation, et particulièrement **en ce que** la surélévation a une forme de languette anglée vers le haut, qui préférablement monte en s'éloignant du centre de rotation, étant connectée à la traverse en une pièce.

8. Chambre climatique selon l'une des revendications précédentes, **caractérisée en ce que** le dispositif de chargement est rotatif autour du centre de rotation (30), et particulièrement **en ce qu'**il est rotative par au moins 200°, préférablement par essentiellement 360°.

9. Chambre climatique selon l'une des revendications précédentes, **caractérisée en ce que** l'arrangement de stockage (6) est arrangé sur un plat rotatif qui tourne autour du centre de rotation, et **en ce qu'**une cavité ou une ouverture (23) pour recevoir une partie du système de transport est prévue dans un centre du plat rotatif.

10. Chambre climatique selon l'une des revendications précédentes, **caractérisée en ce que** le système de transport a un entrainement en rotation (43) et un pignon de rotation pour tourner le dispositif de chargement autour du centre de rotation (30), l'entrainement en rotation étant arrangé de manière rotative et le pignon de rotation étant arrangé de manière stationnaire.

11. Chambre climatique selon l'une des revendications précédentes, **caractérisée en ce que** le système de transport a une colonnette d'ascenseur et un chariot d'ascenseur (5) verticalement déplaçable et arrangé à la colonnette d'ascenseur, le chariot d'ascenseur portant le dispositif de chargement, la colonnette d'ascenseur étant arrangée hors de l'arrangement de stockage annulaire et un bras portant d'ascenseur (41) étant arrangé entre la colonnette d'ascenseur et le dispositif de chargement, et **en ce que** le bras d'ascenseur est verticalement déplaçable dans une cavité de l'arrangement de stockage annulaire.

12. Chambre climatique selon l'une des revendications précédentes, **caractérisée en ce que** le dispositif de chargement a une pale (46) horizontalement extensible, un bras courbé pivotable (50) pour déplacer en avance et de retour la pale et un entrainement pour pivoter le bras courbé (50), arrangé latéralement de la pale, et **en ce que** le bras courbé est courbé afin d'éviter une collision avec un objets à stocker arrangé à la même hauteur sur la pale,
et/ou **en ce que** le bras courbé est arrangé à une extrémité de manière amovible dans un support de bras (59), particulièrement dans une rainure (58), qui est orienté transversalement par rapport à une direction de déplacement en avance de la pale.

13. Chambre climatique selon l'une des revendications précédentes, **caractérisée en ce que** le dispositif de chargement a une pale (46) horizontalement déplaçable en avance, une courroie d'entrainement (52) et une entrainement de pale (44), la courroie d'entrainement étant entrainée par l'entrainement de pale, s'étendant dans une zone essentiellement parallèle à une direction de déplacement en avance de la pale et étant couplé avec la pale dans cette zone.

14. Chambre climatique selon l'une des revendications précédentes, **caractérisée en ce que** le système de transport a une colonnette d'ascenseur et un chariot d'ascenseur (5) verticalement déplaçable et arrangé à la colonnette d'ascenseur, un réducteur à engrenages (34) étant arrangé au chariot d'ascenseur afin d'entrainer le chariot d'ascenseur, et particulièrement en ce que le réducteur à engrenages est exécuté comme une courroie de transmission.

15. Chambre climatique selon l'une des revendications précédentes, **caractérisée en ce que** le dispositif de chargement et d'autres potentielles parties du système de transport (4) qui tournent autour centre de rotation est équilibré ou bien sont équilibrées par rapport à des rotations autour du centre de rotation, et particulièrement **en ce qu'**un contrepoids (38) est prévu, qui compense le balourd par rapport au centre de rotation.

16. Chambre climatique selon l'une des revendications précédentes, **caractérisée en ce qu'**un lecteur de code-barres (110) et/ou un capteur plaque (120) sont arrangés au chariot d'ascenseur, et particulièrement **en ce que** leur rayons de lecture (111, 121) sont orientés dans une direction de mouvement d'une pale de transport du dispositif de chargement.

17. Chambre climatique selon l'une des revendications précédentes, **caractérisée en ce qu'**une écluse (12) est arrangée à la chambre climatique, à travers de laquelle les objets à stocker sont transportés entre l'arrangement de stockage et une position extérieure de transfert (73) arrangée hors de la chambre climatique et étant opérable automatiquement, et particulièrement **en ce que** les dimensions de l'écluse sont ajustées à celles des objets à stocker.

18. Chambre climatique selon la revendication 17, **caractérisée en ce que** l'écluse (12) est arrangée à une couverture ou à un fond de la chambre climatique.

19. Chambre climatique selon la revendication 18, **caractérisée en ce qu'**elle a un mécanisme télescopique (40, 82), et particulièrement **en ce qu'**elle a une colonnette d'ascenseur (40), un guidage de transfert (82) arrangé de manière déplaçable sur la colonnette d'ascenseur (40) et un chariot d'ascenseur (5) arrangé de manière déplaçable sur le guidage de transfert (82).

20. Chambre climatique selon l'une des revendications précédentes, **caractérisée en ce qu'**une porte avant (11) est arrangée à la chambre climatique, les dimensions de laquelle sont équivalentes à celles d'une surface latérale de la chambre climatique.
